# EUROPÄISCHE PATENTANMELDUNG

(11) **EP 1 813 897 A2**
(43) Veröffentlichungstag der Anmeldung: **01.08.2007**
(21) Anmeldenummer: 06124452.1
(22) Anmeldetag: 03.12.2001
(51) Int. Cl.: F25D 29/00, F25D 11/02, F25B 5/04

(54) **Verfahren zur Regelung eines Kühlgerätes**

(30) Priorität: 22.12.2000 DE 10064318
(62) Teilanmeldung aus: 01989566.3
(71) Anmelder: BSH Bosch und Siemens Hausgeräte GmbH, 81739 München (DE)
(72) Erfinder: Arnold, Friedrich, 73432, Aalen (DE); Nuiding, Wolfgang, 89537, Giengen (DE)

(57) **Zusammenfassung**

Die Erfindung betrifft ein Verfahren zur Regelung eines Kühlgerätes mit einem geschlossenen Kühlmittelkreislauf, in dem mindestens ein Verdichter (1) und mindestens zwei getrennte Kühlräume (24) für unterschiedliche Temperaturen mit in Reihe geschalteten Verdampfern (10,30) und separaten, das Starten des oder der Verdichter (1) auslösenden Temperatursensoren (20,40) angeordnet sind, wobei der Verdampfer (10) des Kühlraumes (2) für tiefere Temperaturen dem Verdichter (1) direkt nachgeschaltet ist. Dazu ist ein Laufzeitintervall des oder der Verdichter (1), dessen oder deren Einschalten durch den Temperatursensor (40) des Kühlraumes (4) höherer Temperatur bewirkt wird, länger ist als die Zeitspanne, die das Kühlmittel zum Erreichen und zum vollständigen Durchströmen des dem kälteren Kühlraum (2) zugeordneten Verdampfers (10) benötigt. Außerdem ist ein Laufzeitintervall des oder der Verdichter, dessen oder deren Einschalten durch den Temperatursensor (20) des Kühlraumes niedriger Temperatur bewirkt wird, kürzer als die Zeitspanne, die zum Erreichen und zum vollständigen Durchströmen des Verdampfers benötigt wird.

Mit der vorliegenden Erfindung wird eine Regelung geschaffen, die ein Einhalten der Temperaturen in Kühlräumen (2,4) verschiedener Größe ermöglicht.

## Beschreibung

Die Erfindung betrifft ein Verfahren zur Regelung eines Kühlgerätes mit einem geschlossenen Kühlmittelkreislauf, in dem mindestens ein Verdichter und mindestens zwei getrennte Kühlräume für unterschiedliche Temperaturen mit in Reihe geschalteten Verdampfern und separaten, das Starten des oder der Verdichter auslösenden Temperatursensoren angeordnet sind, wobei der Verdampfer des Kühlraumes für tiefere Temperaturen dem Verdichter direkt nachgeschaltet ist.

Aus der DE 195 10 268 A1 ist die Steuerung eines Kühlgerätes bekannt. Der Verdichter wird jeweils nur kurz eingeschaltet, damit im wesentlichen der dem Tiefkühlfach zugeordnete Verdampfer mit verdampfenden Kühlmittel gespeist wird. Die relative Einschaltdauer des Verdichters ist auf das Tiefkühlfach abgestimmt. Dieses Verfahren setzt aufeinander abgestimmte Größen der Verdampfer und der unterschiedlich kalten Kühlräume voraus. Wird z.B. viel ungekühltes Gut in den wärmeren Kühlraum eingelagert und hat der kältere Kühlraum seine Solltemperatur, dauert es sehr lange, bis der wärmere Kühlraum seine Solltemperatur erreicht hat. Das Unterschreiten einer Mindesttemperatur im wärmeren Kühlraum wird durch Installation einer zusätzlichen Heizung verhindert.

Der vorliegenden Erfindung liegt daher die Problemstellung zugrunde, eine Regelung zu entwickeln, die ein Einhalten der Temperatur in den verschiedenen Kühlräumen bei beliebigem Größenverhältnis der Räume ermöglicht. Es soll kein zusätzlicher Energieverlust auftreten.

Diese Problemstellung wird mit den Merkmalen des Hauptanspruches gelöst. Dazu ist ein Laufzeitintervall des oder der Verdichter, dessen oder deren Einschalten durch den Temperatursensor des Kühlraumes höherer Temperatur bewirkt wird, länger als die Zeitspanne, die das Kühlmittel zum Erreichen und zum vollständigen Durchströmen des dem kälteren Kühlraum zugeordneten Verdampfers benötigt. Außerdem ist ein Laufzeitintervall des oder der Verdichter, dessen oder deren Einschalten durch den Temperatursensor des Kühlraumes niedriger Temperatur bewirkt wird, kürzer als die Zeitspanne, die zum Erreichen und zum vollständigen Durchströmen des Verdampfers benötigt wird.

Der Verdichter wird mit zwei verschieden langen Intervallen zwischen seinem Ein- und seinem Ausschalten betrieben. Die Einschaltdauer ist lang, wenn die Temperatur im Kühlraum der höheren Temperatur einen voreingestellten Wert überschritten hat. Die Einschaltdauer ist dagegen kurz, wenn die Temperatur im kälteren Fach den für dieses Fach eingestellten Maximalwert überschritten hat. In diesem Falle wird das Kühlmittel nur bis in den Verdampfer des kälteren Kühlraumes gefördert, wo es verdampft. Es bewirkt dann keine wesentliche Kühlung mehr im Kühlraum der höheren Temperatur.

Bei einer langen Einschaltdauer des Verdichters wird erst der Verdampfer für den Kühlraum kälterer Temperatur und verzögert hierzu der Kühlraum wärmerer Temperatur gekühlt. Diese Verzögerung ist u.a. abhängig vom Wärmeinhalt des kälteren Kühlraumes und der Durchströmgeschwindigkeit des Mediums.

Ist mit einem einmaligen Ein- und Ausschalten der voreingestellte maximale Temperaturwert noch nicht unterschritten, wird der Vorgang wiederholt.

Die kurze Einschaltdauer ist u.a. vom Volumenstrom des Verdichters und dem Leitungsvolumen der Leitung vom Verdichter bis zum Ende des Verdampfers des kälteren Kühlraumes abhängig. Die maximale kurze Einschaltdauer ist der Quotient aus dem Leitungsvolumen und dem Volumenstrom des Verdichters.

Eine Regelung umfasst zwei in Reihe geschaltete Regelkreise mit einem gemeinsamen Stellglied. Dieses Stellglied ist der Verdichter. Die erste Regelstrecke ist der Verdampfer des kälteren Kühlraumes. Das Messglied ist der zugeordnete Temperatursensor, der wiederum das Stellglied, den Verdichter, ansteuert.
Hinter diese Regelstrecke ist als zweite Regelstrecke der Verdampfer des wärmeren Kühlraumes geschaltet. Sein Messglied ist der ihm zugeordnete Temperatursensor, der seinerseits auch auf das Stellglied - den Verdichter - wirkt.

Diese Regelung ist geschlossen und durch das Erfassen der Ausgangsgrößen unabhängig von den Randbedingungen der Strecke, wie z.B. der Größe der Kühlräume. Störgrößen auf die jeweiligen Regelstrecken werden durch die jeweiligen Messglieder erfasst. Der Verdichter reagiert mit einer langen oder einer kurzen Einschaltdauer, je nachdem, welcher Temperatursensor ihm den Einschaltimpuls liefert.

Durch die Begrenzung der Länge der Einschaltdauern ist ein Unterkühlen des wärmeren Kühlraumes begrenzt. Es ist im Gegensatz zum Stand der Technik keine Heizung erforderlich, die einen zusätzlichen Energiebedarf bedeuten würde.

Die Temperatursensoren in den einzelnen Kühlräumen haben jeweils eine Schaltgrenze, die jeweils auf einer Maximaltemperatur, z.B. der oberen Grenze der jeweils auf Dauer zulässigen Kühlfachtemperatur, eingestellt ist. Die Messung und/oder die Auswertung der Signale der Temperatursensoren kann getaktet oder kontinuierlich erfolgen.

In einem anderen Ausführungsbeispiel hat mindestens ein Temperatursensor im wärmsten Kühlraum eine zusätzliche Schaltgrenze an einer voreingestellten Minimaltemperatur. Im Normalbetrieb kann der Temperatursensor am kältesten Kühlraum beim Erreichen seiner oberen Schaltgrenze das Einschalten des Verdichters steuern und der Temperatursensor des wärmsten Kühlfaches beim Erreichen seiner unteren Schaltgrenze das Ausschalten des Verdichters steuern.

Auch in diesem Falle werden die Messgrößen zur Steuerung der Stellglieder der Regelung verwendet. Diese Regelung ist auch hier unabhängig von den geometrischen Größen der Kühlräume. Ein Unterkühlen eines Raumes wärmerer Temperatur wird durch das Ausschalten des Verdichters beim Erreichen der Temperatur der unteren Schaltgrenze verhindert.

Wird in diesem Fall im wärmsten Raum die Temperatur des oberen Schwellenwertes, der die Temperatur der oberen Schaltgrenze darstellt, überschritten, läuft der Verdichter so lange, bis z.B. die Temperatur des unteren Schwellenwertes erreicht ist. Dann wird der Verdichter abgeschaltet. Ist zu diesem Zeitpunkt die Temperatur im kälteren Raum über dem eingestellten oberen Schwellenwert, wird der Verdichter erst wieder eingeschaltet, wenn sich die Temperatur des wärmeren Raumes vom unteren Schwellenwert in Richtung des oberen Schwellenwertes entfernt hat. Der Verdichter wird nun wieder so lange eingeschaltet, bis an diesem Temperatursensoren die Temperatur des unteren Schwellenwertes ermittelt wird. Der Verdichter wird auch abgeschaltet, wenn die Temperatur am Temperatursensor des kälteren Kühlraumes unterhalb des oberen Schwellenwertes des kälteren Kühlraumes liegt, wenn gleichzeitig die Temperatur am Temperatursensor des wärmeren Kühlraumes unterhalb des oberen Schwellenwertes des wärmeren Kühlraumes liegt. Da das Kühlmittel erst durch den Verdampfer des Kühlraumes tieferer Temperatur und danach durch den Verdampfer des Kühlraumes höherer Temperatur strömt, wird im ersten Kühlraum mehr Wärme entzogen. Erst verzögert hierzu wird der Kühlraum mit dem zweiten Verdampfer abgekühlt. Die intermittierende Kühlung erfolgt so lange, bis die Temperaturen beider Kühlräume im Bereich unterhalb der jeweiligen oberen Schwellenwerte liegen.

In einer weiteren Variante kann im wärmsten und im kältesten Kühlraum je ein Temperatursensor mit je zwei Schwellenwerten angeordnet sein. Einer dieser Schwellenwerte ist dann auf die Dauerniedrigsttemperatur, der andere auf die Dauerhöchsttemperatur des jeweiligen Kühlraumes eingestellt. Auch in dieser Variante wird der Verdichter eingeschaltet, wenn einer der Temperatursensoren ein Überschreiten des jeweiligen Dauerhöchstwertes misst. Das Erreichen der Dauerniedrigsttemperatur bewirkt dann jeweils ein Abschalten des Verdichters. Der Einsatz eines solchen Temperatursensors im kältesten Raum ermöglicht es, ein Kältemittel einzusetzen, das für Temperaturbereiche unterhalb der Temperatur des kältesten Kühlraumes geeignet ist. Der Temperatursensor des kältesten Kühlraumes verhindert durch das rechtzeitige Abschalten des Verdichters ein Unterkühlen dieses Kühlraumes.

Überschreiten die Temperaturen mehrerer Kühlräume gleichzeitig die eingestellten Maximaltemperaturen, so hat das Signal des wärmsten Kühlraumes zum Einschalten des Verdichters Vorrang. Dieses Signal bestimmt den Kühlzyklus, bis der wärmste Kühlraum seine Solltemperatur erreicht hat.

Die Temperatursensoren können Kennlinien haben, die an ihren Schaltpunkten Schalthysteresen aufweisen. Sinkt die Temperatur, ist der Absolutwert des Schalttemperatur niedriger als bei steigender Temperatur. Somit wird ein Bereich geschaffen, innerhalb derer sich die Temperatur des Kühlraumes verändern kann, ohne dass der Verdichter zu oft geschaltet wird.

Weitere Einzelheiten der Erfindung ergeben sich aus den Unteransprüchen und der nachfolgenden Beschreibung schematisch dargestellter Ausführungsformen.
- Figur 1:: Schaltbild des Kühlgeräts mit Gefrierkühlteil;
- Figur 2:: Temperaturverlauf in einem Normalkühlraum bei einer Regelung mit je einem Schaltpunkt pro Temperatursensor;
- Figur 3:: Temperaturverlauf in einem Gefrierkühlraum bei einer Regelung mit je einem Schaltpunkt pro Temperatursensor;
- Figur 4:: Verdichterbetriebs- und Stillstandszeiten bei einer Regelung mit je einem Schaltpunkt pro Temperatursensor;
- Figur 5:: Temperaturverlauf in einem Normalkühlraum bei einer Regelung mit je zwei Schaltpunkten pro Temperatursensor;
- Figur 6:: Temperaturverlauf in einem Gefrierkühlraum bei einer Regelung mit je zwei Schaltpunkten pro Temperatursensor;
- Figur 7:: Verdichterbetriebs- und Stillstandszeiten bei einer Regelung mit je zwei Schaltpunkten pro Temperatursensor.

In einem Kühlgerät wird der Kühlraum mit Hilfe eines in einem geschlossenen Kreislauf geförderten Kältemittels, dem Kühlmedium, gekühlt. In diesem Kreislauf sind u.a. ein Verdichter, ein Kondensator, ein Drosselorgan und ein Verdampfer angeordnet. Im Verdichter wird das Kältemittel auf einen hohen Druck verdichtet. Im nachgeschalteten Kondensator wird das verdichtete Kältemittel unter Wärmeabgabe verflüssigt. Dieses flüssige Kältemittel wird in einer Drossel expandiert, bevor es unter Wärmeaufnahme im Verdampfer in den gasförmigen Zustand rückgewandelt wird. Dieses gasförmige Kältemittel wird wieder dem Verdichter zugeführt.

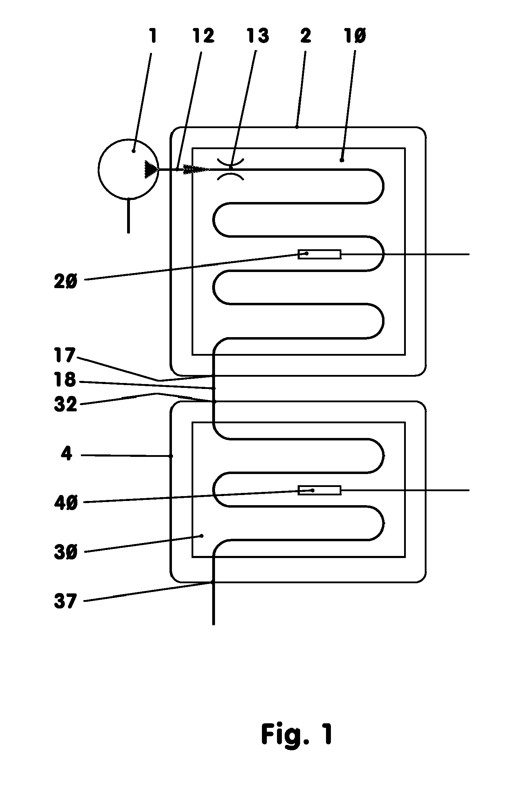

Figur 1 zeigt eine Reihenschaltung zweier Verdampfer (10, 30) eines Kühlgerätes mit Kühlbereichen (2, 4) unterschiedlicher Temperatur. Hierbei ist der Verdampfer (10) dem Bereich tieferer Temperatur, z.B. einem Gefrierkühlraum (2), und der Verdampfer (30) einem Bereich einer höheren Temperatur, z.B. einem Normalkühlraum (4), zugeordnet.

In jedem Kühlraum (2, 4) ist ein Temperatursensor (20, 40) angeordnet. Hierbei befindet sich der Temperatursensor (20) im Kühlraum (2).

Das Kühlmedium strömt durch eine im Zulauf (12) des Verdampfers (10) angeordnete Drosselstelle (13) in den Verdampfer (10). Durch den Auslauf (17) und eine Verbindungsleitung (18) gelangt es in den Zulauf (32) des Verdampfers (30). Nach Durchströmen des Verdampfers (30) verlässt das Kühlmedium diesen über den Auslauf (37).

Die beiden Temperatursensoren (20, 40) haben beispielsweise jeweils einen Schaltpunkt. Dieser ist z.B. auf einem Maximalwert, z.B. auf die zulässige Dauerhöchsttemperatur des jeweiligen Kühlraums eingestellt. Die Temperatursensoren sind je nach Ausführung ggf. elektrisch mit der Ansteuerung des Verdichters verbunden.

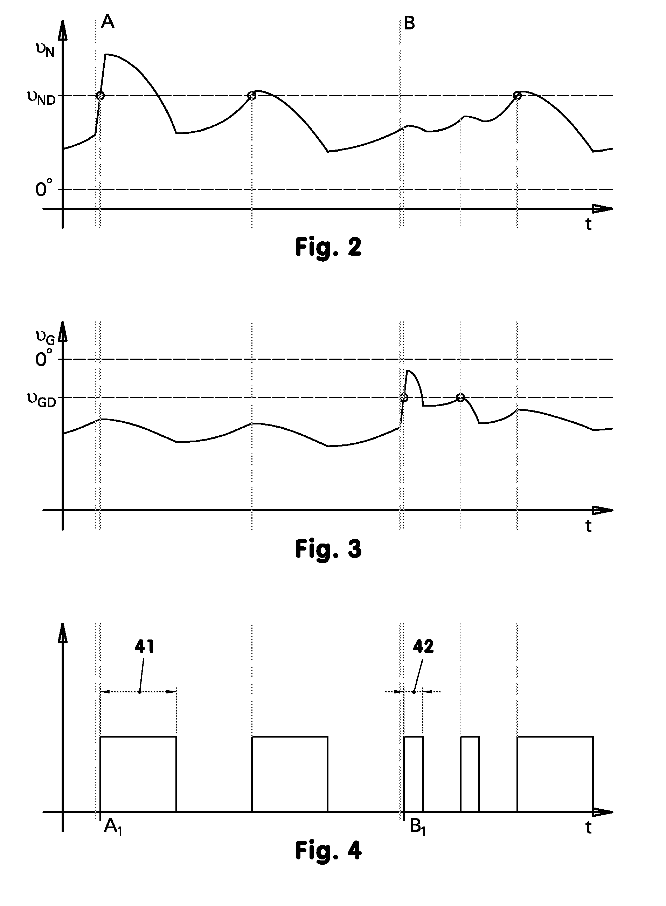

Die Figuren 2 - 4 zeigen einige Regelvorgänge des Regelkreises für die Temperaturregelung des Kühlgerätes. Die einen Regelvorgang auslösenden Messgrößen sind die Temperaturen der jeweiligen Kühlräume (2, 4), vgl. Figur 2 und 3, die Stellgröße ist die Laufzeit des Verdichters (1), vgl. Figur 4. Hierbei zeigt die Figur 2 einen exemplarischen Temperaturverlauf in einem Normalkühlraum (4). Die Temperaturen sind hier mit den Indizes N bezeichnet. Die Figur 3 zeigt einen exemplarischen Temperaturverlauf im Gefrierkühlraum (2), die Temperaturen sind hier mit den Indizes G bezeichnet.

Ermittelt beispielsweise der Temperatursensor (40) zum Zeitpunkt (A₁) eine erhöhte Temperatur (υ_{N}) des Normalkühlraumes, z.B. als Folge einer zum Zeitpunkt (A) geöffneten Tür in den Figuren 2 - 4, wird der Verdichter (1) eingeschaltet. Der Temperatursensor (20) ermittelt zum Zeitpunkt (A₁) beispielsweise eine Temperatur (υ_{N}) am oder oberhalb des Dauerhöchstwertes (υ_{ND}). Das vom gestarteten Verdichter (1) geförderte Medium wird in der Drosselstelle (13) expandiert. Hiernach durchströmt es den ersten Verdampfer (10). Ein Großteil des Mediums wird verdampft. Das gesamte Medium strömt über die Verbindungsleitung (18) in den Verdampfer (30). Hier verdampft das restliche Medium. Den Kühlräumen (2, 4) und dem Kühlgut wird hierbei Wärme entzogen. Die Verdampfung im Verdampfer (30) des Normalkühlraumes (4) erfolgt gegenüber dem vorgeschalteten Verdampfer (10) verzögert.

Nach einer voreingestellten Zeit, dem Laufzeitintervall (41), wird der Verdichter (1) wieder abgeschaltet. Ist die vom Temperatursensor (40) gemessene Temperatur (υ_{N}) an Temperatursensor (40) im Normalkühlraum (4) weiterhin oberhalb des Dauerhöchstwertes (υ_{ND}), wird der Verdichter (1) wieder eingeschaltet und wiederholt den Zyklus mit einem gleichlangen Laufzeitintervall (41).

Ist die Sensortemperatur (υ_{N}) nun unterhalb des Dauerhöchstwertes (υ_{ND}), bleibt der Verdichter (1) ausgeschaltet.

In der Folgezeit steigt die Temperatur des Kühlgutes und des Normalkühlraumes (4) kälteverlustbedingt wieder an. Wird der Dauerhöchstwert (υ_{ND}) des Temperatursensors (40) im Bereich des Verdampfers (30) wider überschritten, wird der Verdichter (1) wieder gestartet.

Überschreitet die Temperatur (υ_{G}) im Bereich des Verdampfers (10) des Gefrierkühlraumes (2) zum Zeitpunkt (B₁) den voreingestellten Dauerhöchstwert (υ_{GD}), z.B. nach dem Öffnen der Tür des Gefrierkühlraumes (2) zum Zeitpunkt (B) in den Figuren 2 - 4, bewirkt der Temperatursensor (20) im Zeitpunkt (B₁) ein Einschalten des Verdichters (1). Der Verdichter (1) läuft nur das kurze Laufzeitintervall (42). Aufgrund der kurzen Laufzeit des Verdichters (1) wird das flüssige Medium nur in den Verdampfer (10) gefördert. Dort wird es in gasförmiges Medium umgewandelt. Durch die Eigenbewegung des Mediums verteilt sich das Gas innerhalb der Verdampfer (10) und (30). Erst beim nächsten Einschalten des Verdichters (1) wird das Gas weitertransportiert. Es kann in diesem Zustand nur noch eine geringe Wärmemenge aufnehmen und bewirkt somit nur eine geringe Abkühlung des Normalkühlraumes (4).

Ist die vom Temperatursensor (20) abgefragte Temperatur (υ_{G}) an Temperatursensor (20) oberhalb der eingestellten Dauerhöchsttemperatur (υ_{GD}), wird der Verdichter (1) wieder für ein kurzes Zeitintervall (42) eingeschaltet. Neues flüssiges Medium wird in den Verdampfer (10) gefördert, wo es verdampft. Das dort befindliche gasförmige Medium wird in Richtung des Auslaufs (17) und des Verdampfers (30) gepumpt.

Ist nun die am Temperatursensor (20) abgefragte Temperatur (υ_{G}) unterhalb des Dauerhöchstwertes (υ_{GD}), bleibt der Verdichter (1) ausgeschaltet.

Wird das Kühlgerät eingeschaltet, sind zunächst beide Kühlräume (2, 4) warm. Nach dem Einschalten des Verdichters (1) durchströmt das Kühlmedium die Verdampfer (10, 30). Der Verdichter (1) wird nach regelmäßigen Zeitintervallen (41) wieder abgeschaltet und die Temperatur (υ_{N}) am Temperatursensor (40) abgefragt. Die Zeitintervalle, in denen der Verdichter (1) eingeschaltet ist, sind so lang wie diejenigen bei Kühlung nur des Normalkühlraumes (4).

Ermittelt der Temperatursensor (40) eine Temperatur (υ_{N}) unterhalb des eingestellten Dauerhöchstwertes (υ_{ND}), wird der Temperatursensor (20) abgefragt. Ermittelt dieser noch eine zu hohe Temperatur (υ_{G}), erfolgt die weitere Kühlung mit kurzen Laufzeitintervallen (42). Die einzelnen Laufzeitintervalle (42) sind so lang wie die bei alleiniger Kühlung des kälteren Kühlraumes (2).

Wird während dieser Zeit z.B. die Tür des wärmeren Kühlraumes (4) geöffnet, steigt die Temperatur (υ_{N}) in diesem Raum an. Der Sensor (40) ermittelt eine erhöhte Temperatur (υ_{N}), worauf der Verdichter (1) für einen langes Laufzeitintervall (41) eingeschaltet wird.

Ermitteln beide Sensoren (20, 40) eine Temperatur (υ_{N}, υ_{G}) unterhalb des jeweiligen Dauerhöchstwertes (υ_{ND}, υ_{GD}), wird der Verdichter erst wieder eingeschaltet, wenn einer der Temperatursensoren (20, 40) eine Temperatur (υ_{N}, υ_{G}) oberhalb des Dauerhöchstwertes (υ_{ND}, υ_{GD}) feststellt. Stellt der Temperatursensor (40) eine Temperaturerhöhung fest, wird der Verdichter für ein langes Intervall (41) eingeschaltet, stellt der Temperatursensor (20) eine Temperaturerhöhung fest, wird der Verdichter für ein kurzes Intervall (42) eingeschaltet.

Haben die Temperatursensoren (20, 40) zwei Schaltpunkte, kann jeweils der eine auf einen oberen Schwellenwert, beispielsweise einem Dauerhöchstwert (υ_{NO}, υ_{GO}), und der andere auf einen unteren Schwellenwert der Temperatur, beispielsweise einer Dauerniedrigsttemperatur (υ_{NU}, υ_{GU}), eingestellt sein. Die Schwellenwerte der Temperatursensoren (20, 40) weisen in der Regel Schalthysteresen auf.

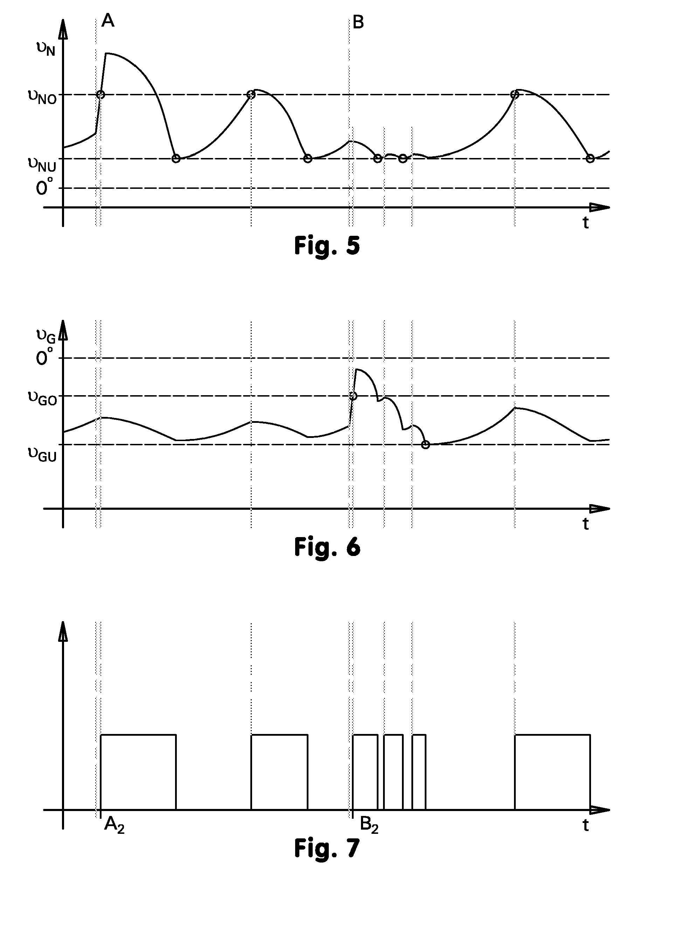

Die Figuren 5 - 7 zeigen exemplarisch verschiedene Schaltzustände einer solchen Regelung. Hierbei zeigt die Figur 5 den Temperaturverlauf eines Normalkühlraumes (4), Figur 6 den Temperaturverlauf in einem Gefrierkühlraum (2) und die Figur 7 die Betriebs- und Stillstandszeiten des Verdichters (1).

Ermittelt jetzt der Temperatursensor (40) eine zu hohe Temperatur (υ_{N}), beispielsweise kurz nach dem Öffnen der Tür des Normalkühlraumes (4) im Zeitpunkt (A), ermittelt der Temperatursensor (40) im Zeitpunkt (A₂) eine Temperatur (υ_{N}) oberhalb des oberen Schwellenwertes (υ_{NO}). Der Verdichter (1) wird eingeschaltet. Die Temperatur (υ_{N}) steigt noch weiter an, bis das die Leitungen durchströmende Kältemittel seine Wirkung zeigt. Dem Kühlraum und dem Kühlgut wird Wärme entzogen, die Temperatur (υ_{N}) sinkt. Im Gefrierkühlraum (2) wird hierbei wegen der geringen Temperaturdifferenz zwischen Kühlgut und Kältemittel nur wenig Medium verdampft. Der Rest des flüssigen Mediums verdampft im Verdampfer (30) des Normalkühlraumes (4). Ist die Temperatur (υ_{N}) im Bereich des Verdampfers (30) weit genug abgesunken, spricht der untere Schwellenwert (υ_{NU}) des Temperatursensors (40) an. Dies bewirkt ein Ausschalten des Verdichters (1). Hiermit wird verhindert, dass der Normalkühlraum (4) unterkühlt wird.

Überschreitet die Temperatur (υ_{G}) am Temperatursensor (20) zum Zeitpunkt (B₂) den oberen Schwellenwert (υ_{GO}), beispielsweise nach dem Öffnen der Tür des Gefrierkühlraumes (2), vgl. Zeitpunkt (B), wird ebenfalls der Verdichter (1) eingeschaltet. Stellt der Temperaturfühler (40) im Normalkühlraum (4) ein Unterschreiten des unteren Schwellenwertes (υ_{NU}) der Temperatur (υ_{N}) im Bereich des Verdampfers (30) fest, wird der Verdichter (1) ausgeschaltet.

Ist in diesem Zustand die Temperatur (υ_{G}) im Bereich des Verdampfers (10) noch nicht weit genug abgesunken, versucht der Temperatursensor (20) des Gefrierkühlfaches (2) ein Wiedereinschalten des Verdichters (1) zu bewirken. Dies ist aber erst möglich, wenn die Temperatur (υ_{N}) im Normalkühlraum (4) sich vom unteren Schwellenwert (υ_{NU}) weg zu höheren Temperaturen (υ_{N}) geändert hat.

Der Verdichter wird dann wieder eingeschaltet, bis an einem der Temperatursensoren (20, 40) der untere Schwellenwert (υ_{NU}, υ_{GU}) für den zugehörigen Verdampfer (10 bzw. 30) erreicht wird.

Wird das Kühlgerät eingeschaltet, sind zunächst beide Kühlräume (2, 4) warm. Nach Einschalten des Verdichters (1) durchströmt das Kühlmedium die Verdampfer (10, 30), bis einer der Temperatursensor (20, 40) die Temperatur (υ_{N}, υ_{G}) den jeweiligen unteren Schwellenwert (υ_{NU}, υ_{GU}) erreicht hat. Je nachdem, an welchem der beiden Temperatursensoren (20, 40) der Schwellenwert (υ_{NU}, υ_{GU}) erreicht wird, wird im weiteren Kühlprozess der andere Kühlraum wie oben beschrieben gekühlt. Dieser Prozess wird solange fortgesetzt, bis beide Kühlräume (2, 4) ihre Solltemperatur zwischen der Dauerhöchst- und der Dauerniedrigsttemperatur erreicht haben.

Sind die Temperaturen (υ_{N}, υ_{G}) in beiden Kühlräumen (2, 4) innerhalb des jeweiligen Toleranzbereiches, bleibt der Verdichter (1) abgeschaltet.

Es ist auch eine Ansteuerung möglich, bei der der Verdichter (1) regelmäßig für eine vorbestimmte Zeit, z.B. den im ersten Beispiel beschriebenen kurzen Zeitintervall, eingeschaltet wird. Die Temperatursensoren (20, 40) bewirken dann das rechtzeitige Ausschalten, damit die Kühlräume (2, 4) nicht unterkühlt werden. Zusätzlich hierzu wird der Verdichter (1) gestartet, wenn einer der Temperatursensoren (20, 40) eine Temperatur (υ_{N}, υ_{G}) oberhalb der oberen Schwellenwerte (υ_{NO}, υ_{GO}), misst.

Die Ruhezeiten des Verdichters (1) können sehr kurz sein. Um ein Abtauen zu gewährleisten, kann z.B. alle 24 Std. eine längere Stillstandsphase des Verdichters (1) eingeplant werden.

Die Verdichterlaufzeiten können z.B. über eng beieinanderliegende Regler-Schwellwerte (υ_{NO}, υ_{NU}) bestimmt werden. So kann z.B. die Temperatur (υ_{N}) des Normalkühlraumes (4) angehoben oder abgesenkt werden.

Das Ausführungsbeispiel bezieht sich auf eine Ausführung mit zwei Kühlräumen (2, 4). Es sind aber auch Kombinationen mit mehreren Kühlräumen unterschiedlicher Temperaturen möglich. Zum Beispiel kann das kälteste Fach ein Tiefkühlfach sein, ein zweites ein Kühlfach mit etwa -12°C sein, ein drittes etwa -6°C haben und ein viertes ein Normalkühlfach sein.

## Patentansprüche

1. Verfahren zur Regelung eines Kühlgerätes mit einem geschlossenen Kühlmittelkreislauf, in dem mindestens ein Verdichter und mindestens zwei getrennte Kühlräume für unterschiedliche Temperaturen mit in Reihe geschalteten Verdampfern und separaten, das Starten des oder der Verdichter auslösenden Temperatursensoren angeordnet sind, **dadurch gekennzeichnet,**
- **dass** im Normalbetrieb der Temperatursensor (20) des kältesten Kühlraumes (2) das Einschalten des oder der Verdichter (1) steuert und,
- **dass** der Temperatursensor (40) eines wärmeren Kühlraumes (4) bei einer voreingestellten Minimaltemperatur (υ_{NU}) das Ausschalten des oder der Verdichter (1) steuert.

2. Verfahren nach Anspruch 1, **dadurch gekennzeichnet, dass** bei Überschreiten einer voreingestellten Maximaltemperatur (υ_{NO}) im wärmeren Kühlraum (4) der oder die Verdichter (1) so lange eingeschaltet wird oder werden, bis zumindest die Maximaltemperatur (υ_{NO}) unterschritten ist.

3. Verfahren nach Anspruch 1, **dadurch gekennzeichnet, dass** die Stillstandsdauer des oder der Verdichter (1) mindestens einmal täglich eine eingestellte Solldauer überschreitet.

4. Verfahren nach Anspruch 1, **dadurch gekennzeichnet, dass** mindestens ein Temperatursensor (40) oder ein Temperatursensorsystem im wärmeren Kühlraum (4) zwei Schaltpunkte hat.

5. Verfahren nach Anspruch 1 oder 4, **dadurch gekennzeichnet, dass** mindestens ein Temperatursensor (20) im kältesten Kühlraum (2) zwei Schaltpunkte hat.

6. Verfahren nach Anspruch 1, **dadurch gekennzeichnet, dass** bei gleichzeitigem Überschreiten der zulässigen Dauerhöchsttemperaturen (υ_{ND}, υ_{GD}) in mehreren Kühlräumen (2, 4) das Signal des Temperatursensors (40) des wärmsten Kühlraumes (4) Vorrang hat.

7. Verfahren nach Anspruch 1, **dadurch gekennzeichnet, dass** die Kennlinie der Temperatursensoren (20, 40) an ihren Schaltpunkten Schalthysteresen aufweisen.
